(19) Europäisches Patentamt

European Patent Office

Office européen des brevets

(11) **EP 1 018 814 A2**

(12) **EUROPEAN PATENT APPLICATION**

(43) Date of publication:
**12.07.2000 Bulletin 2000/28**

(51) Int. Cl.⁷: **H04J 14/02**

(21) Application number: **00100104.9**

(22) Date of filing: **04.01.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **05.01.1999 JP 34099**

(71) Applicant:
**ALPS ELECTRIC CO., LTD.**
**Ota-ku Tokyo 145 (JP)**

(72) Inventors:
• **Someno, Yoshihiro**
  **Otsuka-cho, Ota-ku, Tokyo (JP)**
• **Kikuchi, Kimihiro**
  **Otsuka-cho, Ota-ku, Tokyo (JP)**

(74) Representative:
**Klunker . Schmitt-Nilson . Hirsch**
**Winzererstrasse 106**
**80797 München (DE)**

(54) **Optical communication apparatus**

(57)     An optical communication apparatus includes plural light sources having various emitting wavelengths, plural branching filters provided at demultiplexing points or multiplexing points, the branching filters reflecting or transmitting light from said plural light sources, a plastic optical fiber interconnecting the branching filters, thereby conducting light and a light receiving element for receiving the branched light which is reflected or transmitted at said branching filter, wherein the branching filter splits the branched light into wavelength bands so that the half-widths of the wavelength bands do not overlap the others.

FIG. 1

Printed by Xerox (UK) Business Services
2.16.7 (HRS)/3.6

**Description**

BACKGROUND OF THE INVENTION

1. Field of the Invention

The present invention relates to fiber transmission devices capable of performing various multiple bus signal transmissions, or two-way communication in a single optical fiber, and more particularly relates to an optical fiber transmission device suitable for use with plastic optical fibers.

2. Description of the Related Art

Recently, in order to achieve electromagnetic-noise-free transmission, high-speed transmission, reduced size, reduced weight, simplified installation and maintenance work and the like, optical communication apparatus (fiber-optic local area networks) have been used in practice instead of electrical communication systems.

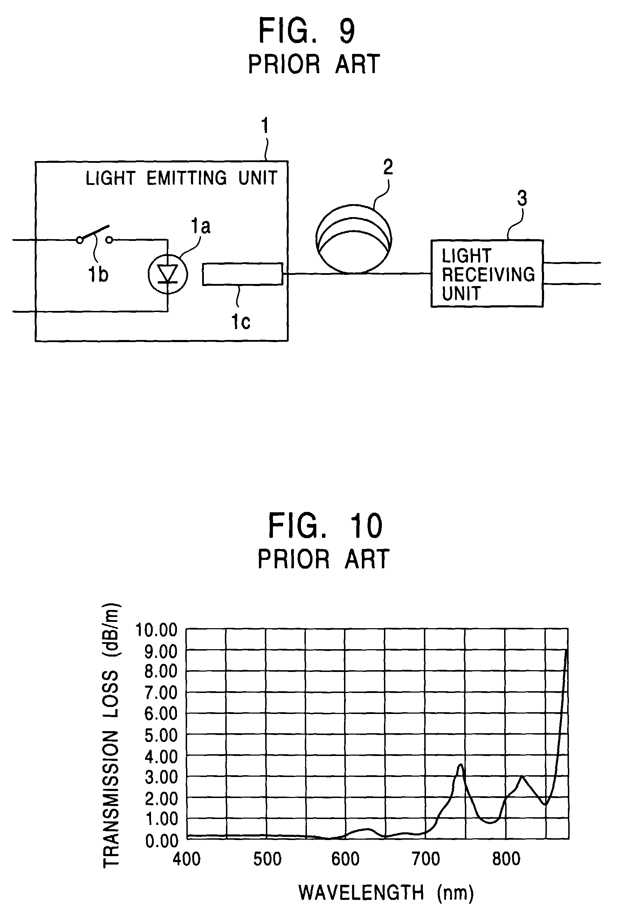

Fig. 9 shows a construction of a conventional optical communication apparatus employed in such an optical communication apparatus. In the optical communication apparatus, by electrically turning a light emitting unit 1 on and off, on-off information is sent through an optical fiber from the light emitting unit 1 to a light receiving element 3. The light emitting unit 1 includes a light emitting element 1a, which is composed of a light emitting diode (LED) or the like, and which serves as a light source for converting an electrical signal into an optical signal (bus signal), a switch 1b, which is an electrical switch for causing the light emitting element 1a to turn on or off in accordance with information represented by "1" or "0", and a lens 1c for focusing an emitted light beam from the light emitting element 1a on one end face of a plastic optical fiber 2, which is a type of optical fiber.

In the optical communication apparatus with the above-described construction, when an optical signal is sent from a single light emitting unit 1 to plural light receiving elements 3 by time-dividing the optical signal, fast switching of the switch 1b is performed. When an optical signal (bus signal) is sent from plural light emitting units 1 to plural light receiving elements 3 in one-to-one correspondence, plural light emitting units 1 and their counterparts, i.e., light receiving elements 3, which have selectivity for each of the wavelengths $\lambda_1$, ..., and $\lambda_n$ by performing wavelength multiplexing, are provided on the plastic optical fiber 2.

Applications utilizing this type of optical communication apparatus are known. For example, there are plural switches in vending machines, industrial plants and the like; monitoring systems for monitoring door-switch operations in automobiles; and automated central control systems, such as home automation systems, and medical automation systems.

Plastic optical fiber 2, utilized in this optical communication apparatus is less expensive, easy-to-use, easy to work at the ends, and furthermore transmits visible light.

When light beams emitted from plural LEDs are incident on a single plastic optical fiber 2, transmission loss in the plastic optical fiber 2 is a problem.

In the plastic optical fiber 2 utilized in the above-described optical communication apparatus, as shown in Fig. 10, there is no more than a slight transmission loss toward the shorter wavelengths (approximately 400 to 600 nm) as well as in wavelength of red light (generally approximately 650 nm) from a red LED. Accordingly, shorter wavelengths, such those emitted from blue LED or green LED have attracted attention.

At the shorter wavelengths, a bus signal is expected to be sent to over a distance via the plastic optical fiber 2 by causing an optical signal (bus signal), corresponding to light sources such as a blue LED, a green LED, a yellow LED, and a red LED, to perform switching of the switch 1b.

When various types of LEDs are simply mounted on the optical communication apparatus, and light beams emitted from the LEDs reach the light receiving element 3 through the single plastic optical fiber 2, light beams in neighboring wavelength bands mutually interfere. Hence, noise is generated in a predetermined optical signal (bus signal) at the light receiving element 3, which results in another problem in which valid-optically-sent-information cannot be accurately demodulated.

Optical communication apparatus, which control plural switches in vending machines, industrial plants, and the like, and a monitoring system for monitoring door-switch operations in automobiles, adopt various characteristic bus communication methods, such as fiber-optic data distribution interface (FDDI), or "Institute of Electrical and Electronic Engineers" (IEEE) 1394. When this optical communication apparatus is incorporated into electronic device whereby information output from the electronic device is transferred through the plastic optical fiber 2 to a remote site, the electronic device must be adjusted to apply an appropriate bus communication method or modifications must be made to the already-matched electronic device to detect this information at the remote site and to perform operations in accordance with the information. These modifications are time-consuming.

## SUMMARY OF THE INVENTION

The present invention is made to solve the foregoing problems, and accordingly, it is an object of the present invention to provide an optical communication apparatus which operates with various bus communication types, and which performs noise-free optical transmission.

To this end, according to a first aspect of the invention, there is provided an optical communication apparatus including plural light sources having various emitting wavelengths, plural branching filters provided at demultiplexing points or multiplexing points, the branching filters reflecting or transmitting light from the plural light sources, a plastic optical fiber interconnecting the branching filters, thereby conducting light and a light receiving element for receiving the branched light which is reflected or transmitted at the branching filter, wherein the branching filter splits the branched light into wavelength bands so that the half-widths of the wavelength bands do not overlap the others.

According to a second aspect of the present invention, there is provided an optical communication apparatus including a sending unit including plural light emitting elements for emitting light beams of various wavelengths, and a first branching filter provided at demultiplexing points or multiplexing points for reflecting or transmitting light from the plural light emitting elements, a receiving unit including a second branching filter provided at demultiplexing points or multiplexing points for reflecting or transmitting light, and plural light receiving elements receiving light from the second branching filter and converting the received light into an electric signal, and a plastic optical fiber interconnecting the first branching filter of the sending unit and the second branching filter of the receiving unit, wherein the first branching filter and the second branching filter split the branched light into wavelength bands so that the half-widths of the wavelength bands do not overlap the others.

Both two aspects of the invention enable signals to be transmitted using light, without interference among light beams and without causing cross talk in conditions which minimize transmission loss in plastic optical fiber.

In the optical communication apparatus, each of the first branching filter and the second branching filter may includes plural branching filters, respectively and the plastic optical fiber may interconnect the plural branching filters.

When it is desired to send more information, this is achieved by increasing the number of light emitting elements and their corresponding branching filters as necessary and connecting the additional components to the apparatus. The addition of those components is easily performed in the process of connection. Therefore workability is greatly improved.

In the optical communication apparatus, the branched light may have a wavelength band from visible light to near infrared light.

It is easy to confirm whether or not light is conducted by observing at an end of the plastic optical fiber, whereby various types of components can be easily connected to the optical communication apparatus. Moreover, by extending the emitted light wavelength into the infrared light region, a great number of electrical devices can be connected to the optical communication apparatus.

## BRIEF DESCRIPTION OF THE DRAWINGS

Fig. 1 shows a basic construction of a four-wavelength-emitting optical communication apparatus;

Fig. 2 shows the emission spectrum of the light emitting elements constituting the four-wavelength-emitting optical communication apparatus;

Fig. 3 illustrates the emission spectrum of the light emitting elements, the transmittance and the reflectance of each branching filter of the four-wavelength-emitting optical communication apparatus;

Fig. 4 shows the spectral sensitivity characteristics of the light receiving elements of the optical communication apparatus of the present invention;

Fig. 5 shows a basic construction of an eight-wavelength-emitting optical communication apparatus;

Fig. 6 shows the optical outputs from light receiving elements of the four-wavelength-emitting optical communication apparatus of the present invention;

Fig. 7 shows the optical outputs from light receiving elements of the eight-wavelength-emitting optical communication apparatus of the present invention;

Fig. 8 shows the optical outputs from light receiving elements of the twelve-wavelength-emitting optical communication apparatus of the present invention;

Fig. 9 shows a construction of a conventional optical communication apparatus; and

Fig. 10 shows the optical transmission loss in a plastic optical fiber.

## DESCRIPTION OF THE PREFERRED EMBODIMENTS

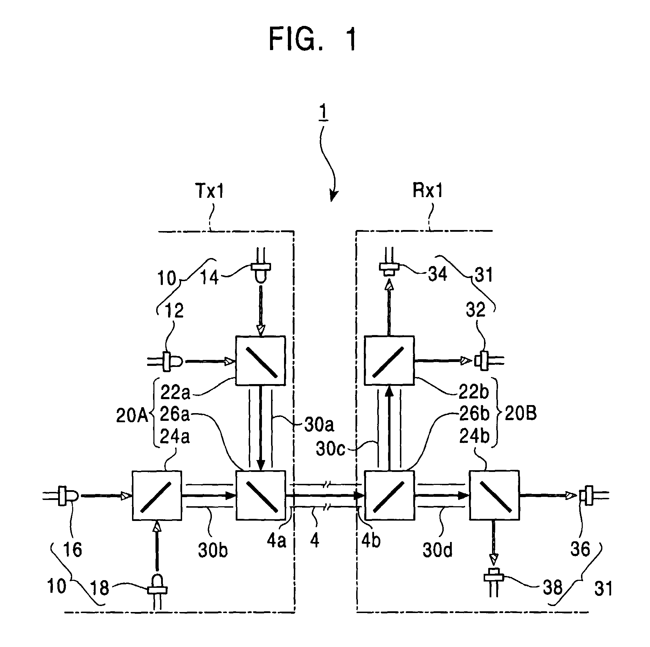

Fig. 1 shows a basic construction of an optical communication apparatus according to the present invention. The optical communication apparatus 1 has plural transmitting units $T_X1$, $T_X2$, ..., and $T_Xn$; plural receiving units $R_X1$, $R_X2$, ..., and $R_Xn$; and a plastic optical fiber 4 for connecting the transmitting units and the receiving units. The transmitting unit $T_Xn$ includes plural light emitting units 10 for emitting plural light beams having different wavelengths $\lambda_1$, $\lambda_2$, and $\lambda_n$, and plural optical demultiplexers 20A for performing optical branching or multiplexing by reflecting or transmitting light beams emitting from the light emitting units 10. One of the optical demultiplexers 20A is connected to one end 4a of the single plastic optical fiber 4. The light beams emitted from the light emitting unit 10 pass into the end 4a and travel through the plastic optical fiber 4 to a remote site. Receiving units $R_X1$, $R_X2$, ..., and $R_Xn$ are provided at the other end 4b of the plastic optical fiber 4. The receiving unit $R_Xn$ includes plural light receiving units 31, each individually having selectivity to one of the light beams of wavelengths $\lambda_1$, $\lambda_2$, ..., and $\lambda_n$ and plural optical demultiplexers 20B for branching, to each of plural light receiving units 31, a light beam in each predetermined wavelength band from the entire spectrum band. Thus, plural transmitting units $T_X1$, $T_X2$, ..., and $T_Xn$ and plural receiving units, $R_X1$, $R_X2$, ..., and $R_Xn$ are provided at ends of the plastic optical fiber 4 so that both the transmitting units and the receiving units have selectivity for each of wavelengths $\lambda_1$, $\lambda_2$, ..., and $\lambda_n$ in one-to-one correspondence.

Although, for the sake of simplicity, only one pair of the transmitting unit $T_X1$ and the receiving unit $R_X1$ is shown, plural pairs of the transmitting units $T_Xn$ and the receiving units $R_Xn$ are actually disposed along the plastic optical fiber 4. Hereinafter, an optical multiplex communication apparatus 1 using light of four different wavelengths is described as one embodiment of the present invention.

Specifically in this embodiment, the transmitting unit $T_X1$ (one member of the pair) includes light emitting units 10 for emitting light beams of four different wavelengths, the optical demultiplexer 20A for allowing a light beam in only a predetermined wavelength band to be reflected or transmitted, and plastic optical fibers 30a and 30b for conveying light beams therethrough.

The light emitting unit 10 has the light sources, including a light emitting element 12 (blue LED) for emitting a blue light beam ($\lambda_b$ approximately 470 nm), a light emitting element 14 (green LED) for emitting a green light beam ($\lambda_g$ approximately 525 nm), a light emitting element 16 (red LED) for emitting a red light beam ($\lambda_r$ approximately 650 nm) and a light emitting element 18 (infrared LED) for emitting a near infrared light beam ($\lambda_{ir}$ approximately 850 nm).

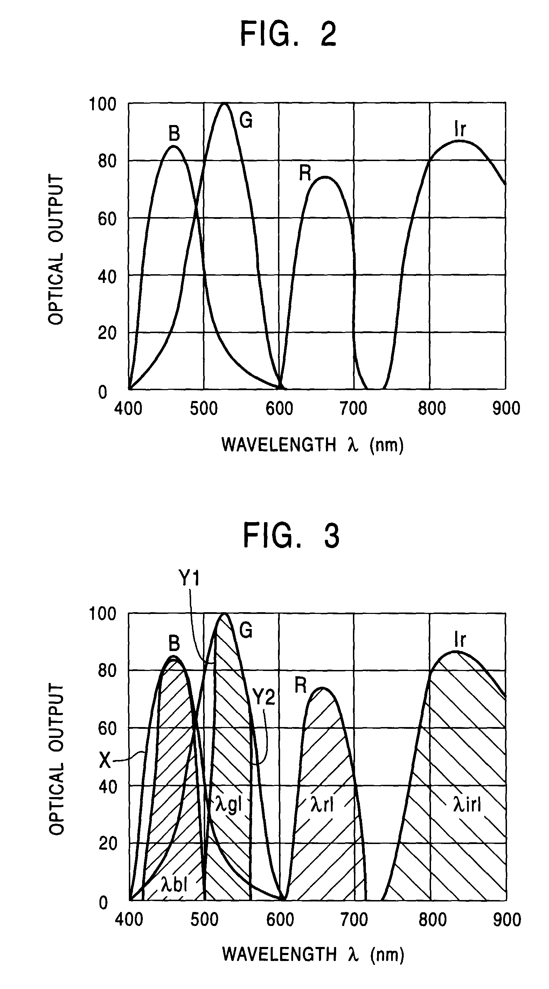

Light emitting elements 12, 14, 16, and 18 are made of LEDs having good response-characteristics. As shown in Fig. 2, the emission spectrum of the output light beams therefrom has peak values in the blue range, the green range, the red range, and the near infrared range, and is substantially normally distributed. The output light beams have optical power highly concentrated along the optical axis. Moreover, light emitting elements 12, 14, 16, and 18 have the ability to show, as an optical signal, information represented by an electrical signal, such as on-off condition of a power supply thereof, and a digital signal. The output signal is output as an optical signal by a driving control device (not shown).

The optical demultiplexer 20A (first branching filter) includes a branching filter 22a reflecting light at blue wavelengths (around 480 nm) and transmitting light at other wavelengths, such as at green wavelengths; a branching filter 24a transmitting light at red wavelengths and reflecting light at other wavelengths (750 to 900 nm), such as at infrared wavelengths; and a branching filter 26a reflecting light at blue and green wavelengths (450 to 560 nm) and transmitting light at other wavelengths, such as at red and infrared wavelengths.

The branching filter 22a has three mounting holes in the casing thereof. Light emitting elements 12 and 14 are fixed at two mounting holes so that each of the two mounting holes is disposed perpendicular to the optical axis of the corresponding light emitting element, and one end of the plastic optical fiber 30a is removably fixed at the remaining mounting hole.

In the branching filter 22a, blue light is reflected and green light is transmitted then they travel to one end of the plastic optical fiber 30a.

In the same way, the branching filter 24a has three mounting holes in the casing thereof. The light emitting elements 16 and 18 are fixed at two mounting holes so that each of the two mounting holes is disposed perpendicular to the optical axis of the corresponding light emitting element, and one end of the plastic optical fiber 30b is removably fixed at the remaining mounting hole.

In the branching filter 24a, red light emitted from the light emitting element (red LED) 16 is transmitted, and infrared light emitted from the light emitting element (infrared LED) 18 is reflected then they travel to one end of the plastic optical fiber 30b.

The branching filter 26a has three mounting holes in the casing thereof. The other end of the plastic optical fiber 30a, the other end of the plastic optical fiber 30b, and one end of the plastic optical fiber 4 are removably mounted at the three mounting holes, respectively.

Moreover, the branching filter 26a reflects blue and green light incident through the plastic optical fiber 30a from light emitting elements 12 and 14, and transmits red and infrared light, incident through the plastic optical fiber 30b from light emitting elements 16 and 18.

Thus, the above branching filters 22a, 24a, and 26a are disposed at optical demultiplexing points for demultiplexing light beams or in optical multiplexing points for multiplexing light beams.

The above plastic optical fibers 4, 30a, and 30b are made of plastic and are thin long wires of diameter approximately 0.75 to 1 mm in the direction of the thickness. Additionally, the plastic optical fiber includes a core, made of polymethyl methacrylate (PMMA), formed in the center of the plastic optical fiber, and a cladding, made of transparent resin, such as polyethylene, formed in the periphery and surrounding the core. By selecting the refractive index of the core to be slightly greater than that of the cladding, because of the difference between the refractive indexes of the core and the cladding, light beams can travel long distances confined within the core.

Plastic optical fibers 4, 30a, and 30b of the present invention employ inexpensive, thick-core diameter, and easy-to-use step-index optical fibers (SI).

A step-index fiber is a fiber in which the refractive index of the core changes stepwise in the radial direction, and is a multiple-mode-type containing multiple light beams, each traveling at a different speed.

Specifically in this embodiment, the receiving unit $R_X1$ includes the light receiving units 31 for receiving light of four different wavelengths, the optical demultiplexers 20B producing a branched light beam at a predetermined wavelength band by reflecting or transmitting light, plastic optical fibers 30c and 30d conducting the light beams therethrough.

The light receiving unit 31 includes light receiving elements 32, 34, 36, and 38. The light receiving elements are made of PIN photodiodes, have good directional characteristics and have relatively broad spectral sensitivity characteristics for light emitted from light emitting elements 12, 14, 16, and 18.

The optical demultiplexer 20B (second branching filter) includes branching filters 22b, 24b, and 26b.

The branching filter 22b has three mounting holes in the casing thereof. Light receiving elements 32 and 34 are fixed at two mounting holes, and one end of the plastic optical fiber 30c is removably fixed at the remaining mounting hole. Moreover, the branching filter 22b allows light conveyed to the end of the plastic optical fiber 30c to branch to light receiving elements 32 and 34.

In the same way as the branching filter 22a, the branching filter 22b is a band-pass filter (BPF) which reflects light in wavelength of only approximately 480 nm and transmits light at other wavelengths.

The branching filter 24b has three mounting holes in the casing thereof. Light receiving elements 36 and 38 are fixed at two mounting holes, and one end of the plastic optical fiber 30d is removably fixed at the remaining mounting hole. Moreover, the branching filter 24b allows light conducted to the end of the plastic optical fiber 30d to branch to light receiving elements 36 and 38.

In the same way as the branching filter 24a, the branching filter 24b transmits only light at wavelengths between approximately 750 and 900 nm and reflects light at other wavelengths.

The branching filter 26b has three mounting holes in the casing thereof. Other ends of the plastic optical fibers 30c, 30d, 4 are removably fixed at the three mounting holes.

Moreover, the branching filter 26b reflects blue and green light, incident through the plastic optical fiber 4 from light emitting elements 12 and 14, and transmits red and infrared light, incident through the plastic optical fiber 4 from light emitting elements 16 and 18.

In the same way as the branching filter 26a, the branching filter 26b reflects only light at wavelengths between approximately 450 to 560 nm and transmits light at other wavelengths.

Plastic optical fibers 30c and 30d are the same as plastic optical fibers 4, 30a, and 30b.

With the above construction, the optical communication apparatus 1 performs optical communication as follows.

Blue light ($\lambda_b$ approximately 475 nm) is emitted from the light emitting element (blue LED) 12, is reflected in the branching filter 22a where light at wavelengths of around 480 nm is reflected, and is incident on one end of the plastic optical fiber 30a. As shown in Fig. 3, the branching filter 22a branches light at predetermined wavelengths (the shaded portion indicated by "X" in Fig. 3) as branched light beam ($\lambda_{bl}$) from light beam ($\lambda_b$) at blue wavelengths.

The blue branched light beam $\lambda_{bl}$ travels through the plastic optical fiber 30a, and is incident on the branching filter 26a which is connected to the other end of the plastic optical fiber 30a. Since the branching filter 26a reflects light at wavelengths of 450 to 560 nm, the blue branched light beam $\lambda_{bl}$ is reflected at the branching filter 26a and is incident on one end of the plastic optical fiber 4 which is disposed perpendicular to the optical axis of the plastic optical fiber 30a.

The blue branched light beam $\lambda_{bl}$ is transmitted through the plastic optical fiber 4, and is incident on the branching filter 26b through the other end of the plastic optical fiber 4. Since the branching filter 26b has the same construction as the branching filter 26a, the blue branched light beam $\lambda_{bl}$ is reflected in the branching filter 26b, and is incident on one end of the plastic optical fiber 30c which is disposed perpendicular to the optical axis of the plastic optical fiber 30c. The blue branched light beam $\lambda_{bl}$ is transmitted through the plastic optical fiber 30c, and is incident on the branching filter 22b through the other end of the plastic optical fiber 30c. Finally, since the branching filter 22b has the same construction as the branching filter 22a, the branching filter 22b reflects the blue branched light beam $\lambda_{bl}$ to the light receiving element 32 where the blue branched light beam $\lambda_{bl}$ is converted into an electric signal.

Since green light ($\lambda_g$ approximately 525 nm) emitted from the light emitting element 14 (green LED), is of specifically reflected wavelengths around 480 nm, the green light is transmitted through the branching filter 22a, and is incident on one end of the plastic optical fiber 30a. As shown in Fig. 3, the branching filter 22a cuts off short wavelengths band which form the lower part from the curve indicated by "Y1" in Fig. 3, and transmits the remainder of the green light beam $\lambda_g$ (Y1) which is the remainder of the emitted green light. The remaining green light beam $\lambda_g$ (Y1) travels through the plastic optical fiber 30a and is incident on the branching filter 26a which is connected to the other end of the plastic optical fiber 30a. Since the branching filter 26a reflects light at wavelengths of 450 to 560 nm, light at long wavelengths in the remaining green light, which is the upper part from the curve indicated by "Y2" in Fig. 3, is allowed to be transmitted. Accordingly, the transmitted light is then reflected, as a green branched light beam ($\lambda_{gl}$), at the branching filter 26a, and is incident on one end of the plastic optical fiber 4. The green branched light beam $\lambda_{gl}$ is transmitted through the plastic optical fiber 4, is incident on the branching filter 26b through the other end of the plastic optical fiber 4, is reflected in the branching filter 26b, and is incident on one end of the plastic optical fiber 30c which is disposed perpendicular to the optical axis of the plastic optical fiber 4. Finally, the green branched light beam $\lambda_{gl}$ is transmitted through the plastic optical fiber 30c, and is reflected, by the branching filter 22b, from the other end of the plastic optical fiber 30c to the light receiving element 32 where the branched light beam is converted into an electrical signal.

Likewise, as shown in Fig. 1, red light ($\lambda_r$ approximately 644 nm) and infrared light ($\lambda_{ir}$ approximately 850 nm) are emitted from the light emitting element 16 (red LED), and are incident on the branching filter 24a where red light beam is reflected through the plastic optical fiber 30b to the branching filter 26a while the infrared light is transmitted through the plastic optical fiber 30b to the branching filter 26a. The red and infrared light travel through the plastic optical fiber 26a, are transmitted through the plastic optical fiber 4 and the branching filter 26b, and are incident on the branching filter 24b through the plastic optical fiber 30d. Since, in the same way as the branching filter 24a, the branching filter 24b reflects the light at wavelengths of 750 to 900 nm, red light is incident on the light receiving element 36 as red branched light beam $\lambda_{rl}$ without substantial modification of the emitted light from the light emitting element 16 (red LED) (Fig. 3). In contrast, the infrared light beam is reflected at the branching filter 24b, and is incident on the light receiving element 38 as a infrared branched light beam $\lambda_{irl}$ without substantial modification of the emitted light beam in the wavelengths from the light emitting element 18 (infrared LED). Finally, the red and the infrared branched light beams are converted into electrical signals at light receiving elements 36 and 38.

Thus, the blue light beam, the green light beam, the red light beam, and the infrared light beam emitted from light emitting elements 12, 14, 16, and 18, respectively, are received as branched light beams at light receiving elements 32, 34, 36, and 38, respectively, so that the wavelengths of the branched light beam do not overlap the others, whereby information sent by multiplexing the light beams as an optical signal and can be accurately received at a remote location.

In view of the differences in the transmission loss in plastic optical fibers 4, 30b and 30d for each wavelength transmitted, the half-width of each branched light beam may be increased so that greater branched light intensity is gained at longer wavelengths, at which transmission loss is greater.

Also, considering the spectral sensitivity characteristics of each of the light receiving elements 32, 34, 36, and 38, as well as the light transmitting characteristics of each of plastic optical fibers 4, 30a, 30b, 30c, and 30d, the branched light intensity characteristics of each branching filter is set so that the branched light intensity characteristics are optimized.

In addition, instead of plastic optical fibers 30a, 30b, 30c, and 30d, optical waveguides may be used.

Table 1

| WAVE-LENGTH λi (nm) | FIBER LOSS ρi db/m | FIBER LOSS 10m TRANS MITTANCE (POF 1) | LED OUTPUT LED-A 475 nm | LED OUTPUT LED-B 525 nm | LED OUTPUT LED-C 850 nm | LED OUTPUT LED-D 644 nm | PD SENSITIVITY (A/W) ηi si-pin | OPT. LED-A 475 nm | OPT. LED-B 525 nm | OPT. LED-C 850 nm | OPT. LED-D 644 nm | FILTER S1 450-560 BAND | FILTER S2 480 BPF | FILTER S3 750-900 BAND | FINAL LED-A 475 nm | FINAL LED-B 525 nm | FINAL LED-C 850 nm | FINAL LED-D 644 nm | LEAK 475 nm | LEAK 525 nm | LEAK 850 nm | LEAK 644 nm |
|---|---|---|---|---|---|---|---|---|---|---|---|---|---|---|---|---|---|---|---|---|---|---|
| 400·· | 0.19 | 33.5% | 0 | 0 | 0 | 0 | 0.18 | 0.000 | 0.000 | 0.000 | 0.000 | 0.65 | 0.81 | 0.070 | 0.000 | 0.000 | 0.000 | 0.000 | 0.000 | 0.000 | 0.000 | 0.000 |
| 450·· | 0.16 | 39.8% | 0.158 | 0 | 0 | 0 | 0.22 | 1.3904 | 0.000 | 0.000 | 0.000 | 0.00 | 0.01 | 0.062 | 0.688 | 0.000 | 0.000 | 0.000 | 0.000 | 0.006 | 0.002 | 0.000 |
| 500·· | 0.14 | 44.7% | 0.036 | 0.119 | 0 | 0 | 0.28 | 0.3744 | 2.104 | 0.000 | 0.000 | 0.07 | 0.73 | 0.938 | 0.012 | 0.486 | 0.000 | 0.000 | 0.182 | 0.032 | 0.003 | 0.049 |
| 550·· | 0.15 | 42.2% | 0 | 0.062 | 0 | 0 | 0.29 | 0.000 | 1.223 | 0.000 | 0.000 | 0.01 | 0.91 | 0.932 | 0.000 | 0.503 | 0.000 | 0.000 | 0.051 | 0.000 | 0.000 | 0.004 |
| 600·· | 0.2 | 31.6% | 0 | 0.004 | 0 | 0 | 0.33 | 0.090 | 0.000 | 0.000 | 0.000 | 0.90 | 0.90 | 0.942 | 0.000 | 0.000 | 0.000 | 0.000 | 0.000 | 0.000 | 0.000 | 0.004 |
| 650·· | 0.15 | 42.2% | 0 | 0 | 0 | 0.334 | 0.34 | 0.000 | 0.000 | 0.000 | 11.129 | 0.94 | 0.93 | 0.944 | 0.000 | 0.000 | 0.000 | 4.448 | 0.020 | 0.272 | 0.266 | 0.000 |
| 700·· | 0.35 | 44.7% | 0 | 0 | 0 | 0 | 0.36 | 0.000 | 0.000 | 0.000 | 0.000 | 0.94 | 0.90 | 0.936 | 0.000 | 0.000 | 0.000 | 0.000 | 0.000 | 0.000 | 0.000 | 0.000 |
| 750·· | 2.5 | 0.3% | 0 | 0 | 0 | 0 | 0.35 | 0.000 | 0.000 | 0.000 | 0.000 | 0.93 | 0.90 | 0.014 | 0.000 | 0.000 | 0.000 | 0.000 | 0.000 | 0.000 | 0.000 | 0.000 |
| 800·· | 2 | 1.0% | 0 | 0 | 0.151 | 0 | 0.33 | 0.000 | 0.000 | 0.648 | 0.000 | 0.94 | 0.91 | 0.000 | 0.000 | 0.000 | 0.292 | 0.000 | 0.002 | 0.016 | 0.000 | 0.000 |
| 850·· | 1.6 | 2.5% | 0 | 0 | 2.51 | 0 | 0.32 | 0.000 | 0.000 | 10.442 | 0.000 | 0.94 | 0.90 | 0.000 | 0.000 | 0.000 | 4.686 | 0.000 | 0.029 | 0.261 | 0.000 | 0.001 |
| 900·· | | | 0 | 0 | 0.248 | 0 | 0.31 | 0.000 | 0.000 | 0.999 | 0.000 | 0.90 | 0.90 | 0.015 | 0.000 | 0.000 | 0.398 | 0.000 | 0.004 | 0.040 | 0.000 | 0.006 |

Drive voltage: LED-A 3.0V | LED-B 3.0V | LED-C 0.8V | LED-D 2.0V

| | LED-A 475nm | LED-B 525nm | LED-C 850nm | LED-D 644nm |
|---|---|---|---|---|
| (sum) | 28 | 38 | 94 | 67 |
| FINAL OUTPUT total | 12.35 | 13.03 | 41.82 | 26.47 |
| LEAKED total | 2.34 | 4.62 | 1.88 | 0.28 |
| CROSS TALK (dB) | 7.22 | 4.50 | 13.48 | 19.78 |

Based on Table 1, optimal conditions are described in which the light emitting unit 10 has four light emitting elements for emitting light at different wavelengths, and in which the light receiving unit 31 receives branched light only in wavelengths in which little or no cross talk occurs.

Table 1 illustrates fiber loss ρ1, the optical outputs of four different light emitting elements 12, 14, 16, and 18, spectral sensitivity characteristics $\eta_1$ of light receiving elements 32, 34, 36, and 38, the output from the end of the fiber on the side of each light emitting element 12, 14, 16, and 18, the transmittance/reflectance $T_1$ of each branching filter, the final output (the output from a light receiving element after a light beam is incident on the light receiving element through a fiber), and leakage light (loss due to dispersion of light) for the wavelength band of 400 to 900 nm, namely the range of the wavelengths λ of visible light and infrared light.

In order to achieve the above optimal conditions, the coating thickness of each branching filter is set so as to have optimal transmittance/reflectance $T_1$. Generally, the transmission loss should be maintained to be equal to or less than 20 dB (1 percent of the transmittance) when a signal is transferred in a single optical (plastic) fiber without using a repeater. In practe, it is desirable for the transmittance loss is desirable to be maintained to be equal to or less than 10 dB.

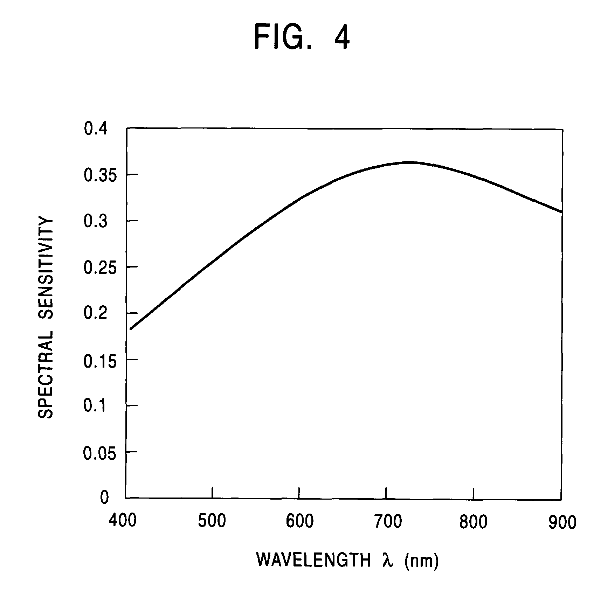

Conditions which minimize the transmission loss and which satisfy the above minimum requirements, may be determined from the following expression (1). Initially, in view of the spectral sensitivity characteristics of the light receiving elements shown in Fig. 4, the output $P_{OUT}$ of a light beam from one end of a plastic optical fiber emitted from a light emitting element through the plastic optical fiber for each wavelength $\lambda_n$ is defined as follows:

$$P_{OUT}(n) = \rho_n \cdot P_n \cdot \eta_n \tag{1}$$

where

$\rho_n$ is the transmission loss in a plastic optical fiber;
$P_n$ is the optical output of a light emitting element;
$\eta_n$ is the sensitivity of a light receiving element.

The final output P(n) of a light beam, which travels through plastic optical fiber and is transmitted or reflected at predetermined branching filters, is determined as follows:

$$P(n) = P_{OUT}(n) \cdot T_n \cdot 1000 \cdot L_n \tag{2}$$

$L_n$ (not shown in Table 1) represents branching loss, and is a constant ($L_n = 0.15$) for all wavelengths.
$T_n$ represents the transmittance or the reflectance of a branching filter.

Thus, the total amount P(total) of each final output P(n) at all wavelengths $\lambda_n$ of 400 to 900 nm is determined as follows;

$$P(total) = -10 \cdot log10 \cdot \Sigma P(nleak)/P(n) \tag{3}$$

$\Sigma P(nleak)$ represents the total amount of the leaked light at all wavelengths.

Accordingly, Table 1 shows optimized results obtained by applying the optimal design to the branching filters to obtain the total amount P(total) which has the final output P(n) with low light transmission loss at each light receiving unit.

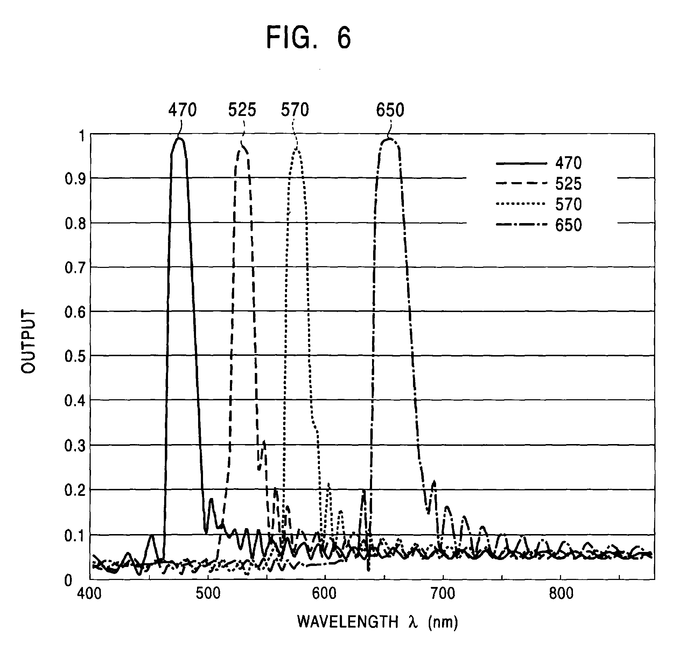

Fig. 6 shows one example of the optimized results in which, in order to optically communicate by causing light of each wavelength to carry information employing the blue LED ($\lambda_b$: 470 nm), the green LED ($\lambda_g$: 525 nm), a yellow LED ($\lambda_y$: 570 nm), and the red LED ($\lambda_r$: 644 nm), the branching filters split the wavelength band into a number of predetermined regions so that the wavelength band of each light beam does not overlap the others.

The optical communication apparatus having a transmitting unit emitting light of four different wavelengths is constructed in the same way as the basic construction shown in Fig. 1, except that a light emitting element (yellow LED) 18a for emitting yellow light, instead of the light emitting element (infrared LED) 18, is used. A light receiving element 38a, i.e., the counterpart of the light emitting element 18a, is provided in the light receiving unit 31.

A normal-distribution is formed in a narrow wavelength band where the peak wavelengths of each light, as shown in Fig. 6, are 465 nm, 520 nm, 565 nm, and 645 nm, and the half-width of each dominant wavelength is maintained within 30 nm. Although each light produces an nth harmonic component, the value of the nth harmonic component is of a nearly negligible quantity.

Thus, by maintaining the half-width of the branched light having a dominant wavelength within 30 nm, optical communication can be performed without risk of cross talk, regardless of the drift of the wavelength band (the shift in the peak of the wavelength) caused by changes in a power supply for a light emitting element.

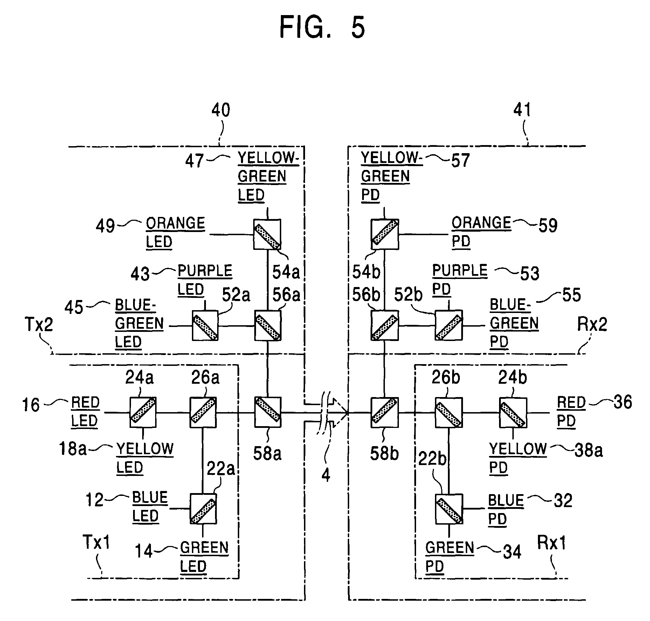

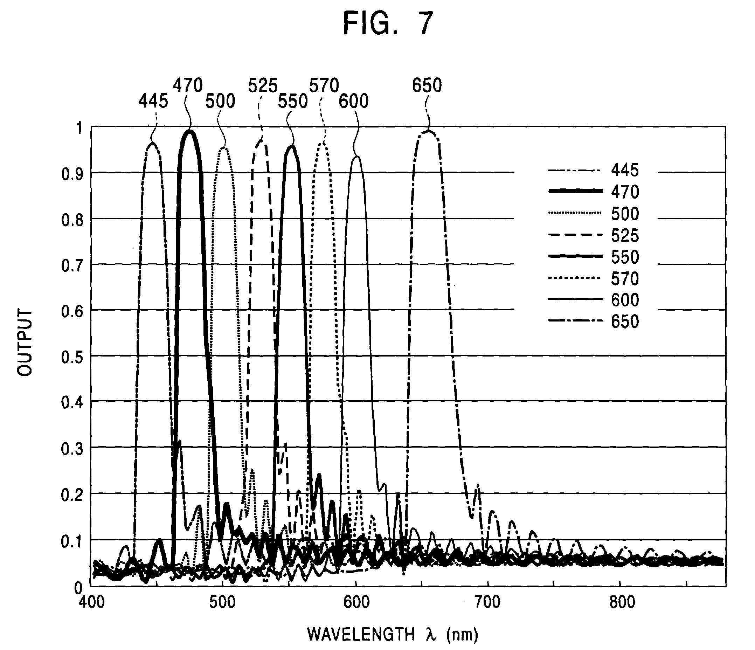

An optical communication apparatus having eight emitting wavelengths according to a second embodiment of the present invention, is described with reference to Figs. 5 and 7.

As shown in Fig. 5, the optical communication apparatus, having eight emitting wavelengths, includes a transmitting unit 40 having light emitting elements for emitting light beams of eight different wavelengths, the plastic optical fiber 4 connecting one end thereof to a part of the transmitting unit 40 for conducting light emitted from the transmitting unit 40, and a receiving unit 41 connected to the other end of the plastic optical fiber 4 having light receiving elements for converting an optic signal into an electrical signal.

The transmitting unit 40 includes a first transmitting unit $T_X1$, a second transmitting unit $T_X2$, and a branching filter 58a connected to the first and the second transmitting units $T_X1$ and $T_X2$.

The receiving unit 41 includes a first receiving unit $R_X1$, a second receiving unit $R_X2$, and a branching filter 58b connected to the first and the second receiving units $R_X1$ and $R_X2$.

The first transmitting unit $T_X1$ has the same construction as the counterpart $T_X1$ in the optical communication apparatus having four emitting wavelengths in the first embodiment. Likewise, the first receiving unit $R_X1$ has the same construction as the that the counterpart $R_X1$ in the first embodiment.

The transmitting unit $T_X2$ basically has the same construction as the transmitting unit $T_X1$, and likewise, the receiving unit $R_X2$ basically has the same construction as the receiving unit $R_X1$. The differences are the employing emitting wavelengths of transmitting units $T_X1$ and $T_X2$, the employing receiving wavelengths of receiving units $R_X1$ and $R_X2$, and spectral sensitivity characteristics of the branching filters of $T_X1$ and $T_X2$ as well as the branching filters of $R_X1$ and $R_X2$.

The transmitting unit $T_X2$ includes a light emitting element (violet LED) 43 emitting violet light ($\lambda_v$ 445 nm), a light emitting element (blue green LED) 45 emitting blue green light ($\lambda_{bg}$ 500 nm), a light emitting element (yellow green LED) 47 emitting yellow green light ($\lambda_{yg}$ 550 nm), a light emitting element (orange LED) 49 emitting orange light ($\lambda_{or}$ 600 nm), a branching filter 52a having light emitting elements 43 and 45 mounted thereon, a branching filter 54a having light emitting elements 47 and 49 mounted thereon, and a branching filter 56a connected through a plastic optical fiber 60a to the branching filter 52a and connected through a plastic optical fiber 60b to the branching filter 54a.

The branching filter 52a transmits only light at violet light wavelength ($\lambda_v$ 445 nm) into the casing thereof, and reflects light at other wavelengths.

The branching filter 54a transmits only light at yellow green light wavelength ($\lambda_{yg}$ 550 nm) into the casing thereof, and reflects light at other wavelengths.

The branching filter 56a transmits only light at wavelengths of 420 to 520 nm into the casing thereof, and reflects light at other wavelengths.

The branching filter 58a reflects light at wavelengths of the violet light ($\lambda_v$ 445 nm), blue green light ($\lambda_{bg}$ 500 nm), yellow green light ($\lambda_{yg}$ 550 nm), and orange light ($\lambda_{or}$ 600 nm), and transmits blue light ($\lambda_b$ 470 nm), green light ($\lambda_g$ 525 nm), yellow light ($\lambda_y$ 570 nm), and red light ($\lambda_r$ 650 nm).

The $R_X2$ includes light receiving elements 53, 55, 57, and 59, which are composed of PIN photo diodes, a branching filter 52b having light receiving elements 53 and 55 mounted thereon, a branching filter 54b having light receiving elements 57 and 59 mounted thereon, a branching filter 56b connected through a plastic optical fiber 60c to the branching filter 52b and connected through 60d to the branching filters 54b.

Branching filters 52b, 54b, and 56b have the same construction as branching filters 52a, 54a, and 56a.

Fig. 7 shows wavelength distribution characteristics of the optical communication apparatus having eight emitting wavelengths.

As shown in Fig. 7, there are eight peak values of the optical outputs, i.e. the violet light ($\lambda_v$ 445 nm), the blue light ($\lambda_b$ 470 nm), the blue green light (($\lambda_{bg}$ 500 nm), the green light ($\lambda_g$ 525 nm), the yellow green light ($\lambda_{yg}$ 550 nm), the yellow light ($\lambda_y$ 570 nm), the orange light ($\lambda_{or}$ 600 nm), and the red light ($\lambda_r$ 650 nm). The half-width of each peak value is equal to or less than 30 nm, whereby a wavelength normal distribution curve is formed in which each optical output having the peak value does not overlap the others.

Accordingly, by sending information as an optical signal on light beams of such wavelengths, the optical communication is performed with little or no cross talk.

As described above, embodiments using the optical communication apparatuses having four different emitting wavelengths and eight different emitting wavelengths have been described. However, the number of the emitting wavelengths of the optical communication apparatus is not necessarily four or eight. For example, two or three light emitting elements may be used for the optical communication apparatus.

In order to extend to the optical communication apparatus which uses twelve light beams having different peak values at wavelengths, it is easily achieved by adding a transmitting unit $T_X3$ and a branching filter, other than $T_X1$ and $T_X2$ as shown in Fig. 5, on the transmitting part, and by adding a receiving unit $R_X3$ and a branching filter, other than $R_X1$, and $R_X2$, on the receiving part.

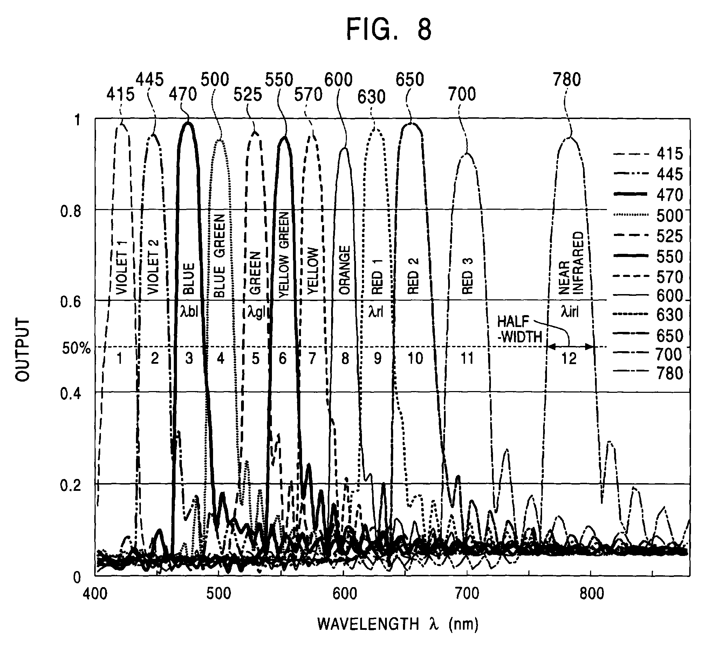

Fig. 8 shows wavelength distribution characteristics of the optical communication apparatus having twelve emitting wavelengths. Four more peaks are provided so as to cover between each peak in the wavelength distribution in Fig. 7. The half-width of each peak value is not more than 30 nm so that the cross talk owing to light at each wavelength is prevented.

Twelve branched light beams branched by branching filters are received, respectively, from shorter wavelengths to longer wavelengths in order of violet 1, violet 2, blue, blue green, green, yellow green, yellow, orange, red 1, red 2, red 3, and near infrared.

When the optical communication apparatus uses four, eight, or furthermore twelve predetermined emitting wavelengths, extra light emitting elements can be easily added and connected via branching filters and plastic optical fibers thereto.

As the number of bus signals corresponding to the light emitting elements increases, for example from 4 to 8, and furthermore to 12, more peaks are provided so as to cover between each peak of the dominant wavelengths of the branched light. Therefore, selectivity for each light at wavelengths increases. In addition, workability is greatly improved in the case of connecting the light emitting elements to bus signals.

The emitting light wavelengths range between 400 nm and 900 nm, which lie within a wavelength range of visible light and near infrared light. In visible light (400 nm to 700 nm), it is easy to confirm whether or not light is conducted by observing at an end of the plastic optical fiber 4, whereby various types of components can be easily connected to the optical communication apparatus. Moreover, by extending the emitted light wavelength into the infrared light region (700 to 900 nm), a greater number of electrical devices can be connected to the optical communication apparatus.

Although it has been described that transmitting units $T_X1$, $T_X2$, ..., and $T_Xn$ have four light emitting elements for each, each transmitting unit does not necessarily have four emitting elements. For example, in Fig. 1, an optical communication apparatus may include a transmitting unit having light emitting elements 16 and 18, branching filters 24a and 26a and the plastic optical fiber 30b; the plastic optical fiber 4; and a receiving unit having light receiving elements 36 and 38, branching filters 24b and 26b, and the plastic optical fiber 30d. Therefore, the optical communication apparatus having two emitting wavelengths is obtained whereby a combination of a plural of the above optical communication apparatuses may be used.

## Claims

1. An optical communication apparatus comprising:

    plural light sources having various emitting wavelengths;
    plural branching filters provided at demultiplexing points or multiplexing points, the branching filters reflecting or transmitting light from said plural light sources;
    a plastic optical fiber interconnecting the branching filters, thereby conducting light; and
    a light receiving element for receiving the branched light which is reflected or transmitted at said branching filter;
    wherein the branching filter splits the branched light into wavelength bands so that the half-widths of the wavelength bands do not overlap the others.

2. An optical communication apparatus comprising:

    a sending unit including plural light emitting elements for emitting light beams of various wavelengths, and a first branching filter provided at demultiplexing points or multiplexing points for reflecting or transmitting light from said plural light emitting elements;
    a receiving unit including a second branching filter provided at demultiplexing points or multiplexing points for reflecting or transmitting light, and plural light receiving elements receiving light from said second branching filter and converting the received light into an electric signal; and
    a plastic optical fiber interconnecting said first branching filter of said sending unit and said second branching filter of said receiving unit;
    wherein said first branching filter and said second branching filter split the branched light into wavelength bands so that the half-widths of the wavelength bands do not overlap the others.

3. An optical communication apparatus according to Claim 2,
    wherein each of said first branching filter and said second branching filter includes plural branching filters, respectively; and
    wherein the plastic optical fiber interconnects said plural branching filters.

4. An optical communication apparatus according to one of Claims 1 to 3, wherein the branched light has a wavelength band from visible light to near infrared light.

FIG. 1

# FIG. 2

# FIG. 3

# FIG. 4

# FIG. 5

# FIG. 6

EP 1 018 814 A2

# FIG. 7

445  470  500  525 570  650
       550  600

OUTPUT

WAVELENGTH λ (nm)

445
470
500
525
550
570
600
650

EP 1 018 814 A2

# FIG. 8

EP 1 018 814 A2

# FIG. 9
## PRIOR ART

LIGHT EMITTING UNIT

1

1b

1a

1c

2

3

LIGHT
RECEIVING
UNIT

# FIG. 10
## PRIOR ART

TRANSMISSION LOSS (dB/m)

10.00
9.00
8.00
7.00
6.00
5.00
4.00
3.00
2.00
1.00
0.00

400    500    600    700    800

WAVELENGTH (nm)